# EUROPEAN PATENT APPLICATION

(11) **EP 2 192 673 A1**
(43) Date of publication of application: **02.06.2010**
(21) Application number: 08831987.6
(22) Date of filing: 01.09.2008
(51) Int. Cl.: H02K 11/00, H02K 1/12, H02K 7/116

(54) **MOTOR**

(30) Priority: 19.09.2007 JP 2007242913
(71) Applicant: Sumida Corporation, Tokyo 103-8259 (JP)
(72) Inventor: YAMAGATA, Tetsuo, Tokyo 103-8259 (JP); NAGASAWA, Hiroaki, Tokyo 103-8259 (JP)
(74) Representative: Price, Paul Anthony King
(86) International application number: PCT/JP2008/065636
(87) International publication number: WO 2009/037957

(57) **Abstract**

A motor having a sensor to detect a rotation angle that enables reduction in size and weight is provided.

A motor 10 includes a reduction gear 19 having a planetary gear, which is provided between a rotor 14 and a rotation axis 16 of the motor 10, a conductor pattern 21 periodically changing in width, which is formed on a surface perpendicular to the rotation axis 16 of the rotor 14, and a rotation angle detection sensor 22, which is provided to oppose the conductor pattern 21.

## Description

### Technical Field

The present invention relates to a motor having a rotation angle detection sensor for detecting the position of a rotor (rotating body) of the motor.

### Background Art

In a brushless DC motor, an angle sensor for a rotor of the motor is provided with the aim of obtaining angle information of the rotor for controlling rectification of a stator of the motor.

As the angle sensor, the method of detecting the magnetic field of a permanent magnet of the rotor is common.
In contrast, when finer control is necessary, a resolver for detecting the angle of a rotation axis is used (for example, see Patent Document 1).

Meanwhile, in a brushless motor, a configuration may be adopted in which a reduction gear is provided between a rotor and a rotation axis of the motor and in which the rotation axis is rotated at the number of revolutions smaller than the original number of revolutions of the motor.

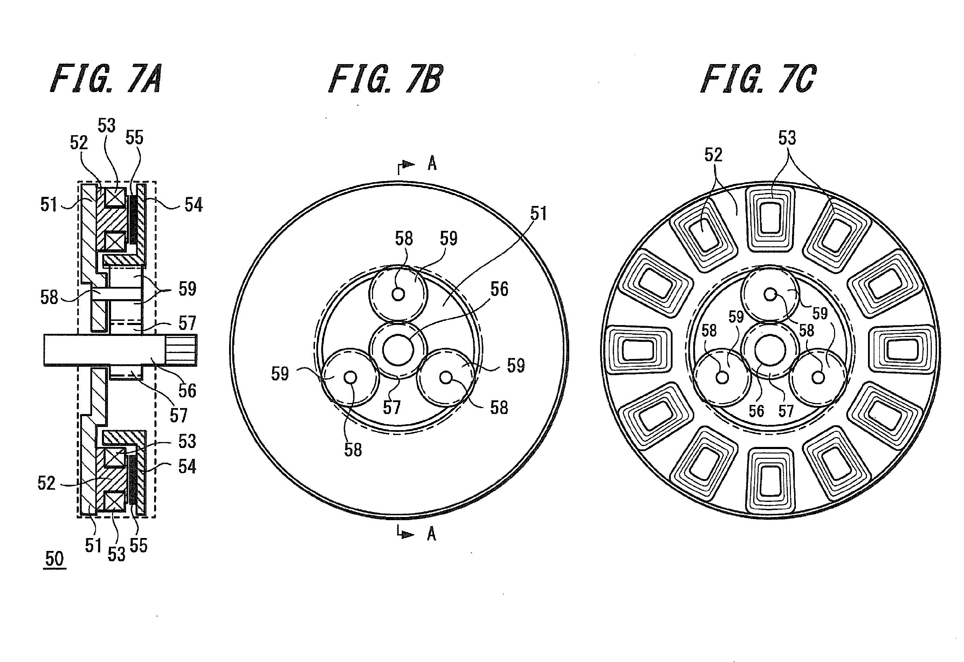

FIG. 7A through FIG. 7C illustrate schematic configuration diagrams of a slim brushless motor in which a reduction gear is coaxially provided in the central portion. FIG. 7A illustrates a cross section of the motor, and FIG. 7B illustrates a plan view of the motor when the motor of FIG. 7A is viewed from the right side in FIG. 7A. Further, FIG. 7C illustrates a plan view of the motor when the rotor has been removed.
A brushless motor 50 is provided with a stator comprising a coil 53, and a rotor 54 to which a magnet 55 is attached, and between the cylindrical internal surface of the rotor 54 and a rotation axis 56, three reduction gears 59 each comprising a planetary gear are provided.
The reduction gear 59 is in a shape of a column, and is engaged with a joint 57 of the rotation axis 56 and the internal surface of the rotor 54 with gears, respectively. A central axis 58 of the reduction gear 59 is attached to a base plate 51 to which a support member (core of the coil) 52 of the stator (coil) 53 is attached.

In such a brushless motor, in order to switch the direction of a current applied to the stator 53 to thereby perform the above-described rectification control, a sensor for detecting the position of the rotor 54 is necessary.

Patent Document 1: Japanese Unexamined Patent Application Publication No. 8-178610

### Disclosure of the Invention

In a regular brushless motor, a resolver is provided directly to a rotation axis.
In contrast, in a brushless motor having a reduction gear, because the original number of revolutions of the motor and the number of revolutions of the rotation axis of the motor are different, if a resolver is directly provided to the rotation axis of which rotation speed is reduced by a planetary gear, fine control of rectification becomes difficult.

Therefore, when a resolver is applied to the slim brushless motor 50 in which a reduction gear is coaxially provided in the central portion as illustrated in FIG. 7A through FIG. 7C, it is necessary to provide the resolver to the rotor 54 in order to detect the original number of revolutions of the motor.
At this time, problems given below are caused.

(1) The resolver occupies the space in the axial direction, thereby impeding slimming of the motor.
(2) It will be necessary to use a resolver having a diameter larger than the outer circumference of the reduction gear, so that including that processing of a large seating surface becomes necessary, the cost increases, and the weight increases.

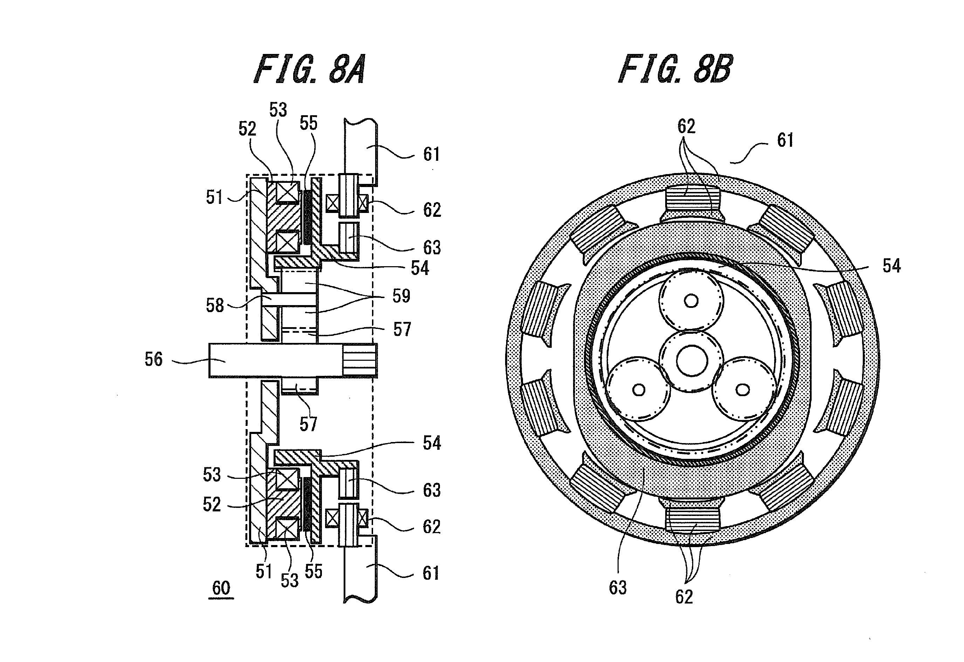

Here, FIG. 8A and FIG. 8B illustrate schematic configuration diagrams of a configuration that a resolver has been applied to the slim brushless motor 50 provided with a reduction gear, which is illustrated in FIG. 7A through FIG. 7C.
As illustrated in FIG. 8A and FIG. 8B, compared with the configuration illustrated in FIG. 7A through FIG. 7C, the rotor 54 is caused to protrude in the direction of the rotation axis in a ring shape, and a rotor 63 of the resolver is attached to the protruded portion. Further, a stator 62 of the resolver is provided outside the rotor 63 of the resolver with a gap between them. In this case, as illustrated in FIG. 8B, 10 pieces of the stator 62 are provided.

Thus, the rotor 63 of the revolver, the stator 62 of the revolver, and an attachment member 61 of the stator 62 of the revolver are provided outside the rotor 54 of the motor along the whole circumference, so that a relatively large space is occupied. Accordingly, it leads to impeding slimming and downsizing of the motor.
Further, because the resolver is provided outside the rotor 54 of the motor for detecting the original number of revolutions of the motor, i.e., the number of revolutions of the rotor 54, the resolver with a relatively large diameter (comprising the rotor 63, stator 62, attachment member 61) has to be formed, and the cost and weight become relatively large.

Also, because the rotor 63 of the resolver has a relatively complicated shape, it is difficult to attach the rotor 63 to the stator 62 with high accuracy. From this viewpoint also, there is concern that the production management becomes cumbersome and complicated, and therewith the cost increases.

To solve the above-described problems, the present invention provides a motor having a sensor for detecting the rotation angle, which enables reduction in size and weight.

A motor of the present invention has a reduction gear comprising a planetary gear between a rotor and a rotation axis of the motor, and in the rotor of the motor, a conductor pattern periodically changing in width is formed on the surface that is perpendicular to the rotation axis, and a rotation angle detection sensor is provided opposing the conductor pattern.

According to the above-described rotation angle detection sensor of the present invention, in the rotor of the motor, a conductor pattern periodically changing in width is formed on the surface that is perpendicular to the rotation axis, and the rotation angle detection sensor is provided opposing this conductor pattern, so that even if a reduction gear comprising a planetary gear is provided, the original rotation angle of the rotor of the motor can be detected by the rotation angle detection sensor.

According to the above-described invention, even if a reduction gear comprising a planetary gear is provided, the original rotation angle of the rotor of the motor can be detected by the rotation angle detection sensor, so that fine rectification control can be performed.
Also, because the rotation angle of the rotor of the motor is detected by the conductor pattern and the rotation angle detection sensor provided opposing the conductor pattern, it is not necessary to provide rotation angle detection sensors throughout the whole circumference 360° of the rotor, so that it is possible to drastically reduce the space occupied by the rotation angle detection sensor, and the freedom in design of the motor is enhanced.
Accordingly, downsizing and lightening the motor having a rotation angle detection sensor and reducing the parts cost of the sensor become possible.

Also, because the conductor pattern can be easily formed in the rotor and can be formed in the rotor with relatively high accuracy as well, it becomes possible to increase the detection accuracy of the rotation angle detection sensor and to reduce the manufacturing cost.

### Brief Description of Drawings

FIG. 1A and FIG. 1B are schematic configuration diagrams of a motor provided with a sensor according to an embodiment of the present invention.
FIG. 2A and FIG. 2B are schematic configuration diagrams of a sensor main body of FIG. 1A and FIG. 1B.
FIG. 3 is a diagram illustrating detailed configuration of the sensor main body of FIG. 1A, FIG. 1B, FIG. 2A, and FIG. 2B.
FIG. 4 is a diagram illustrating an oppositely-arranged state of pattern coils and a conductor pattern in the embodiment of FIG. 1A and FIG. 1B.
FIG. 5 is a diagram illustrating the whole of the arrangement state illustrated in FIG. 4.
FIG. 6 is a plan view illustrating details of a conductor pattern of FIG. 1A and FIG. 1B.
FIG. 7A through FIG. 7C are schematic configuration diagrams of a brushless motor having a reduction gear.
FIG. 8A and FIG. 8B are schematic diagrams of a brushless motor having the configuration illustrated in FIG. 1A and FIG. 1B, in which a revolver has been applied.

### Best Mode for Carrying Out the Invention

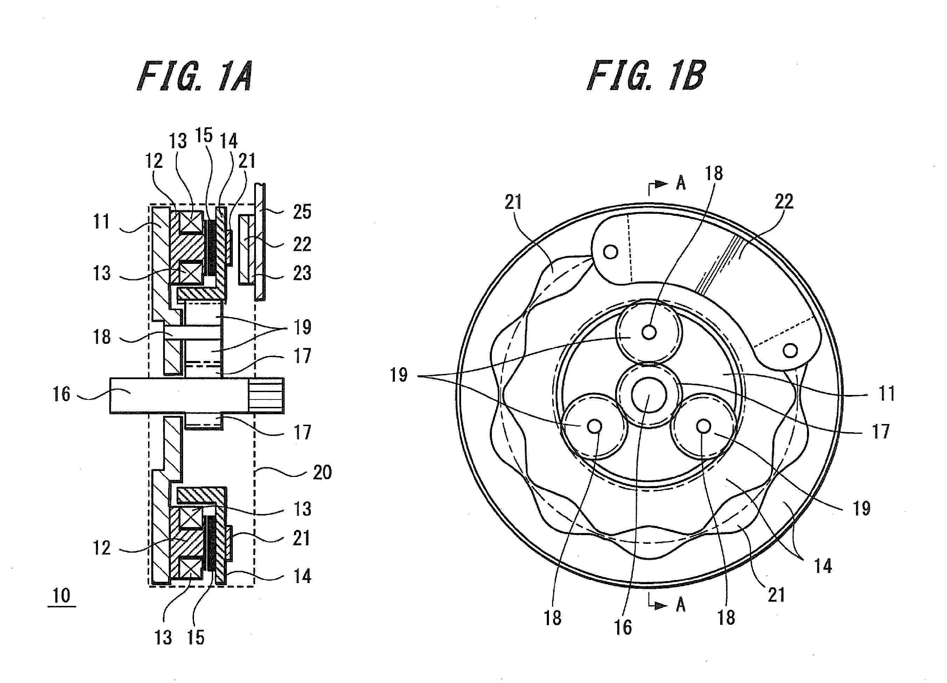

FIG. 1A and FIG. 1B illustrate schematic configuration diagrams of a brushless motor as an embodiment of the present invention. FIG. 1A illustrates a cross section of the motor, and FIG. 1B illustrates a plan view of the motor viewed from the right side in FIG. 1A. FIG. 1A is a cross section at a line A-A of FIG. 1B.

A brushless motor 10 illustrated in FIG. 1A and FIG. 1B includes a stator comprising a coil 13, and a rotor 14 to which a magnet 15 has been attached, and between the cylindrical internal surface of the rotor 14 and a rotation axis 16, three reduction gears 19 each comprising a planetary gear are provided.
The reduction gear 19 is in a shape of a column, and is engaged with a joint 17 of the rotation axis 16 and the internal surface of the rotor 14 with gears, respectively. A central axis 18 of the reduction gear 19 is attached to a base plate 11 to which a support member (core of the coil) 12 of the stator (coil) 13 is attached.
The magnet 15 is attached to the surface on the stator 13 side of the rotor 14, and opposes the stator 13 through a gap.

In the brushless motor 10 of the present embodiment, specifically on the surface on the opposite side of the magnet 15 of the rotor 14, a conductor pattern 21 is formed in a pattern periodically changing in width, and further, opposing the conductor pattern 21, a sensor main body 22 is provided to the internal surface of a motor case 20.
And, the conductor pattern 21 and the sensor main body 22 constitute a sensor that detects the rotation angle of the rotor 14.

For the material of the conductor pattern 21, conductive materials, for example, aluminum, steel, copper, wiring board, conductive foil, or plastic materials containing metal, etc. can be used. It is not necessary to use magnetic materials for the conductor pattern 21.

In the present embodiment, the conductor pattern 21 has a shape changing in width according to a trigonometric function relative to the rotation angle of the rotor 14.

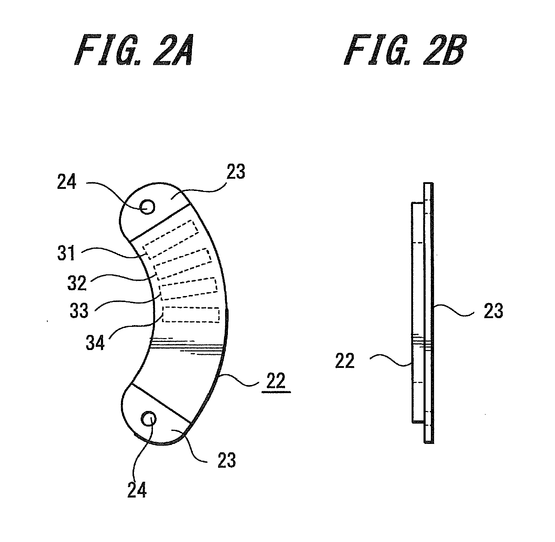

FIG. 2A and FIG. 2B illustrate schematic configuration diagrams of the sensor main body 22 of FIG. 1A and FIG. 1B. FIG. 2A illustrates an upper surface view, and FIG. 2B illustrates a side surface view.
The sensor main body 22 is formed in a box having a shape curved along a circular arc, and inside the box, 4 pattern coils 31, 32, 33, 34 described later in detail are provided. The box is attached to a thin plate-like member 23, and the plate-like member 23 has an attachment hole 24 at an end part thereof. The plate-like member 23 is attached to a member 25 illustrated in FIG. 1A.

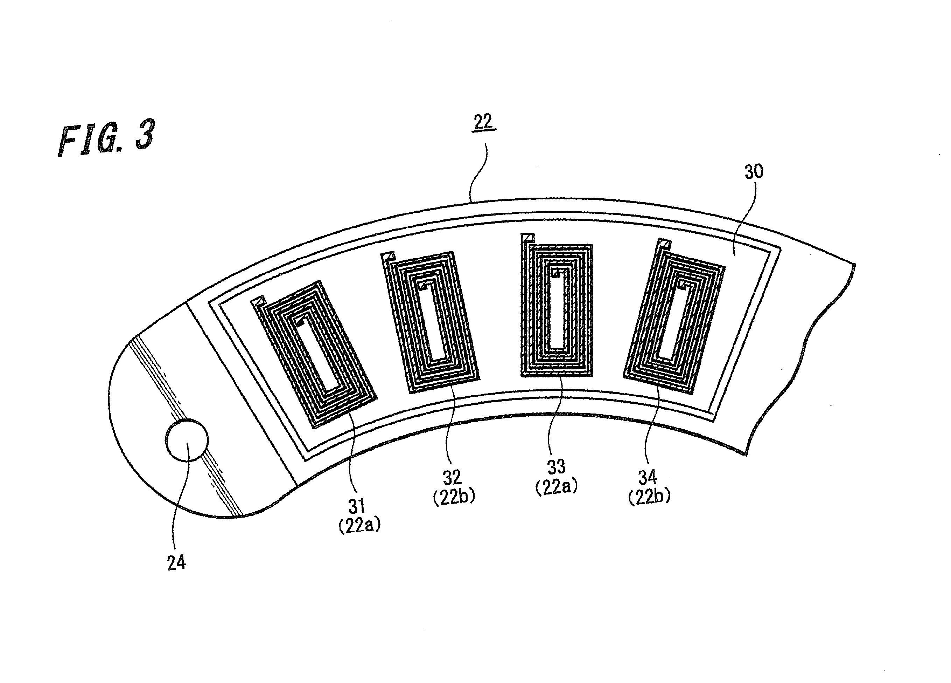

Next, FIG. 3 illustrates a detailed internal configuration (plan view) of the sensor main body 22 illustrated in FIG. 1A, FIG. 1B, FIG. 2A and FIG. 2B.
On a base plate 30 such as a printed circuit board, four pattern coils 31, 32, 33, 34 are formed by conductors each in a square spiral form. Each of the pattern coils 31, 32, 33, 34 constitutes an air core coil.
These base plate 30 and pattern coils 31, 32, 33, 34 are preferably arranged at the side opposing the conductor pattern 21 of the box illustrated in FIG. 2B (the left side of the box in FIG. 2B).
Further, preferably by providing a circuit for arithmetic processing, a peripheral circuit, etc. on the side opposite the side opposing the conductor pattern 21 of the box illustrated in FIG. 2B (the right side of the box in FIG. 2B), the rotation angle detection sensor can be modularized, and thereby downsizing is facilitated.

The rotation angle detection sensor configured as described above has a mechanism to detect the angle by applying a signal current in the range of 500kHz to 5MHz to each of the pattern coils 31, 32, 33, 34 to cause an eddy current to be generated in the conductor pattern 21 and by converting a relative change in the inductance, which is caused in each pattern coil by the eddy current loss, to angle information.
Accordingly, in order to cause the magnetic fluxes, which are generated by applying current to each of the pattern coils 31, 32, 33, 34, to act on the conductor pattern 21 as much as possible, it is desirable to use a nonmagnetic and nonconductive material for the member constituting the box of the sensor main body 22.

The four pattern coils 31, 32, 33, 34 of the sensor main body 22 constitute a first sensor system 22a having the pattern coils 31, 33 and a second sensor system 22b having the pattern coils 32, 34.
Though not illustrated in drawings, a circuit is constituted, for example, such that the pattern coils 31, 33 of the first sensor system 22a are connected in parallel, the pattern coils 32, 34 of the second sensor system 22b are connected in parallel, and detection signals are obtained from these sensor systems 22a and 22b, respectively.

Further, it is preferable to be configured such that a signal processing circuit for processing the detection signals obtained from the sensor systems 22a and 22b is provided and a voltage signal is obtained from the signal processing circuit.

Note that it is also possible to arrange the pattern coils 31, 32, 33, 34 on the outer surface of the box of the sensor main body 22 in an exposed state.
Further, it is also possible to fill up the inside of the box of the sensor main boy 22 with a nonmagnetic filler, and embed the pattern coils 31, 32, 33, 34 and circuit parts constituting circuits in the filler.

Furthermore, in FIG. 3, a case is illustrated that each of the pattern coils 31, 32, 33, 34 is formed by a coil of one layer, however, each of the pattern coils may be formed by electrically connecting coils of more than two layers.

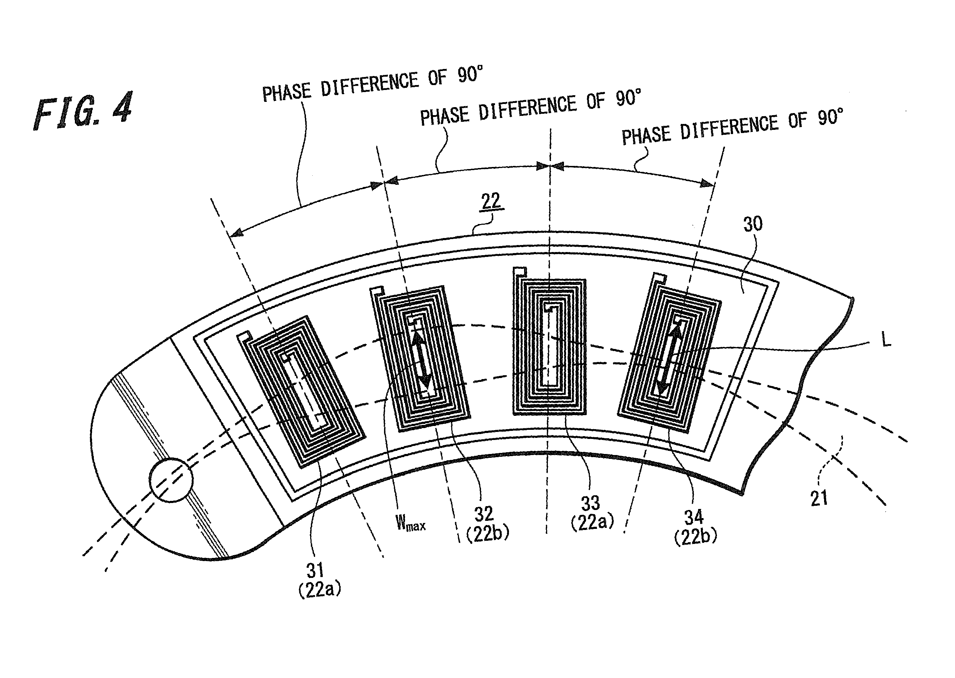

Next, FIG. 4 illustrates an opposed arrangement state of the pattern coils 31, 32, 33, 34 and the conductor pattern 21 in the embodiment of FIG. 1A and FIG. 1B.
The pattern coils 31, 32, 33, 34 are arranged at intervals of a 1/4 cycle of a periodic change of the width of the conductor pattern 21 (phase difference of 90°).
Thereby, the pattern coils 32, 34 of the second sensor system 22b are arranged with an angle displacement of 90° relative to the pattern coils 31, 33 of the first sensor system 22a.

The pattern coils 31, 33 of the first sensor system 22a and the pattern coils 32, 34 of the second sensor system 22b are arranged such that the paired pattern coils 31, 33 and the paired pattern coils 32, 34 form a phase angle offset of 180°.
Thereby, a differential signal can be generated in each paired pattern coils of the sensor systems 22a and 22b. Using this differential signal, the absolute position of the rotor 14 can be detected. Further, it is also possible to detect the moving direction of the conductor pattern 21, i.e., the rotation direction of the rotor 14 (clockwise or counterclockwise).

Further, the longitudinal dimension L of the air core part of each of the pattern coils 31, 32, 33, 34 is formed larger than the maximum width dimension Wmax of the conductor pattern 21. With such a dimensional relationship, the generation degree of an eddy current generated in the conductor pattern 21 when magnetic fluxes are generated from the pattern coils 31, 32, 33, 34 can be enhanced, so that the detection accuracy can be improved.

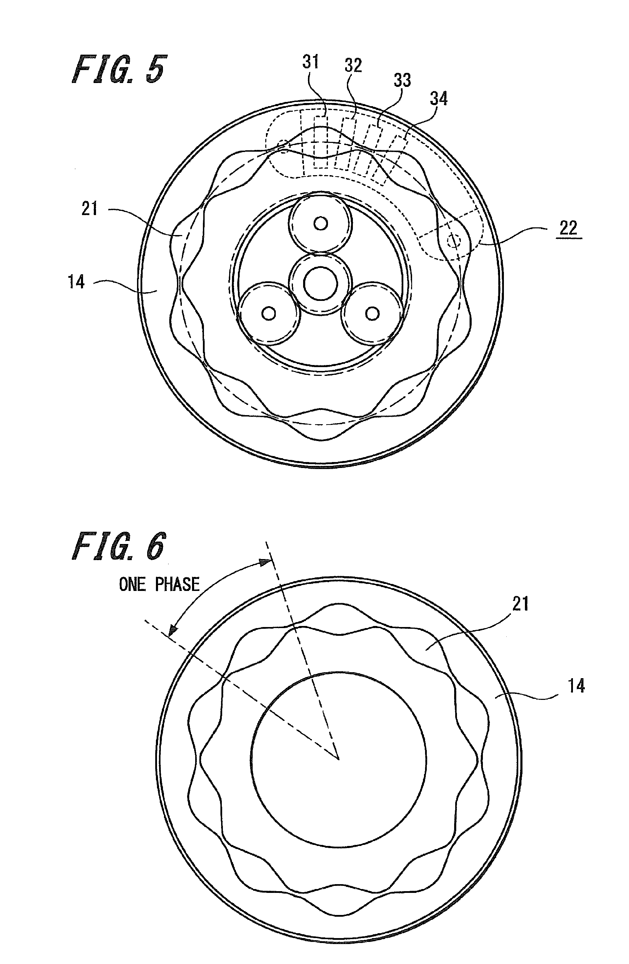

FIG. 5 illustrates the whole of the arrangement state illustrated in FIG. 4.
The conductor pattern 21 is formed in a pattern of 10 cycles (one cycle being 36°) relative to a circumference of the rotor 14. The box of the sensor main body 22 is in a size corresponding to about three cycles of the conductor pattern 21, and the four pattern coils 31, 32, 33, 34 are provided within about one half of the box.

The sensor main body 22 is in a size occupying about 1/4 of the entire circumference of the rotor 14 even if the plate-like member 23 including the attachment hole 24 is included, and the occupying area becomes significantly smaller than the resolver illustrated in FIG. 8B.

FIG. 6 is a plan view showing the details of the conductive pattern 21 of FIG. 1A and FIG. 1B.
As illustrated in FIG. 6, the conductor pattern 21 periodically increases and decreases in width in specific positions when the rotor 14 revolves.
In FIG. 6, the range of one phase of the periodic change in width of the conductor pattern 21 is also illustrated.

Note that the shape of the conductor pattern is not limited to the one formed by sinusoidal curved lines, illustrated in FIG. 6, and may be ones formed by rhombus-like or triangle-like shapes.
Also, besides the configuration that the width continuously changes as in FIG. 6, it may be configured such that the width changes stepwise.

The number of cycles of the conductor pattern is not limited to 10 cycles illustrated in FIG. 6, and may be appropriately determined considering the size of the rotor, conditions for rectification control, etc.

According to the brushless motor 10 in the present embodiment described above, the conductor pattern 21 periodically changing in width is formed on the surface of the rotor 14 of the motor, and the sensor main body 22 in which four pattern coils 31, 32, 33, 34 are arranged is provided to oppose the conductor pattern 21. Thereby, it is possible to detect fairly easily the rotation angle of the rotor 14 of the motor, i.e., the original rotation angle of the motor 10.
Accordingly, even if the reduction gear 19 comprising a planetary gear is provided, the original rotation angle of the motor 10 can be detected without any problem, and by feeding back angle information thereof to the control of the current of the motor, driving of the motor with relatively high accuracy can be realized.

Also, according to the brushless motor 10 of the present embodiment, the rotation angle detection sensor is constituted by the conductor pattern 21 comprising an extremely thin conductor and the sensor main body 22 comprising a relatively slim box having the pattern coils 31, 32, 33, 34 formed on the base plate 30. Thereby, compared with the rotation angle detection sensor comprising a resolver illustrated in FIG. 8A and FIG. 8B, the space occupied by the rotation angle detection sensor can be greatly reduced.
Accordingly, it becomes possible to downsize and lighten the brushless motor having a rotation angle detection sensor.

In addition, with respect to attachment of the sensor main body 22, it is sufficient if only the attachment seating surface (member 25 illustrated in FIG. 1A) for the sensor main body is secured, and processing over the whole outer circumference of the motor is not necessary.
And, in the rotor 14, the conductor pattern 21 is directly formed on the surface that is perpendicular to the rotation axis, so that the conductor pattern 21 can be easily formed with accuracy relative to the rotor 14.

Further, in order to cause an eddy current to be generated in the conductor pattern 21, the frequency of the signal current applied to the pattern coils 31, 32, 33, 34 is set sufficiently high relative to the drive frequency of the motor, so that it is not necessary to arrange a magnetic body or steel core for increasing the inductance value in the core part of each pattern coil, and thereby lightening the motor can be realized.
In addition, because the rotation angle detection sensor provided in a motor of the present invention is configured not to use a magnetic body or steel core which is required in the hitherto known resolver, an exceptional effect can be obtained that the influence given to the angle detection accuracy by the disturbing magnetism from the motor is relatively small, and as a result, detection and control of the drive current of the motor with high accuracy can be realized.

Note that the drive circuit for driving the motor can be provided inside or outside of the motor, either way.

Meanwhile, it is conceivable to build a drive including a motor into a wheel of a vehicle (for example, a motorbike).
By adopting a motor of the present invention with such a configuration as in the above-described embodiment, even in a case of building a drive including a motor into a wheel, there is an advantage that the width of the wheel needs not be made wider.

In the above-described embodiment, the pattern coils 31, 32, 33, 34 of the sensor main body 22 are formed by four pieces in two pairs, however, the number of coils is not limited to four pieces in two pairs.
It is possible to detect the rotation angle of the rotor with accuracy if at least two coils in one pair are provided. Also, it is possible to increase the number of coils in so far as the space occupied by the sensor main body does not increase.
For example, because the sensor main body 22 in the above-described embodiment has the size corresponding to three cycles of the conductor pattern 21, it is possible to form 8 pieces of coils in four pairs.

The present invention is not limited to the above-described embodiment, and various other configurations are possible in the range not departing from the gist of the present invention.

### Explanation of Reference Symbols

- 10:: brushless motor
- 11:: base plate
- 13:: coil (stator)
- 14:: rotor
- 15:: magnet
- 16:: rotation axis
- 19:: reduction gear (planetary gear)
- 21:: conductor pattern
- 22:: sensor main body
- 30:: base plate
- 31,: 32, 33, 34: pattern coil

## Claims

1. A motor comprising:
a rotor;
a rotation axis;
a reduction gear provided between the rotor and the rotation axis, the reduction gear including a planetary gear;
a conductor pattern formed in the rotor on a surface that is perpendicular to the rotation axis, the conductor pattern periodically changing in width; and
a rotation angle detection sensor provided to oppose the conductor pattern.

2. The motor according to claim 1, wherein the rotation angle detection sensor includes a plurality of pattern coils formed at intervals corresponding to cycles of a width of the conductor pattern.
